# EUROPÄISCHE PATENTSCHRIFT

(11) **EP 4 613 417 B1**
(45) Veröffentlichungstag und Bekanntmachung des Hinweises auf die Patenterteilung: **11.02.2026**
(21) Anmeldenummer: 24161868.5
(22) Anmeldetag: 06.03.2024
(51) Int. Cl.: B23K 26/242, B23K 26/26, B23K 26/322

(54) **VERFAHREN ZUR HERSTELLUNG EINES TAILORED WELDED BLANK**
METHOD FOR PRODUCING A TAILORED WELDED BLANK
PROCÉDÉ DE FABRICATION D'UN FLAN SOUDÉ SUR MESURE

(43) Veröffentlichungstag der Anmeldung: 10.09.2025
(73) Patentinhaber: Benteler Automobiltechnik GmbH, 33102 Paderborn (DE)
(72) Erfinder: FROST, Georg, 32839 Steinheim (DE); MERSCHMANN, Uwe, 33104 Paderborn (DE); KLANDT, Michael, 32049 Herford (DE); LOHBERG, Mathias, 33184 Altenbeken (DE)
(74) Vertreter: Ksoll, Peter

(56) Entgegenhaltungen:
- EP-B1- 3 946 801
- DE-A1- 102020 106 530

## Beschreibung

Die vorliegende Erfindung betrifft ein Verfahren zur Herstellung eines Tailored Welded Blank gemäß den Merkmalen im Oberbegriff des Patentanspruchs 1.

Aus der CN 113333948 A ist ein Schweißverfahren zur Verbindung zweier Stahlplatinen bekannt, wobei die zu fügenden Schnittkanten der Blechplatinen jeweils eine Fase aufweisen. Vor dem Fügeprozess werden die Schnittkanten der Blechplatinen gegenüberliegend positioniert, dergestalt, dass sich die Schnittkanten in einem Stoß kontaktieren und die Fasen einen Spalt zwischen den Blechplatinen ausbilden. Mithin wird eine Y-förmige Naht im Fügebereich ausgebildet.

Die Ausbildung der V-förmigen Naht hat den Vorteil, dass die Einbrandfläche durch den Spalt erhöht und der Schweißnahtüberstand minimiert wird, so dass eine belastbare Verbindung der Blechplatinen sichergestellt wird und eine Nachbearbeitung der Schweißnaht entfallen kann.

Die zu fügenden Blechplatinen werden in der Regel aus einem Blechband ausgeschnitten. Erst in einem anschließenden Verfahrensschritt werden die Fasen in den Schnittkanten ausgebildet, zumeist durch eine spanende Bearbeitung. Dieser zusätzliche Verfahrensschritt kostet Zeit und führt zu höheren Herstellungskosten.

Die EP 3 946 801 B1 offenbart ein Verfahren zum Schmelzschweißen eines oder mehrerer Stahlbleche aus presshärtbarem Stahl, wobei das oder mindestens eines der Stahlbleche eine metallische Beschichtung aufweist, die Aluminium enthält, und wobei das Schmelzschweißen unter Zuführung von Zusatzmaterial in das ausschließlich mittels mindestens eines Laserstrahls erzeugte Schmelzbad erfolgt.

Die DE 10 2020 106 530 A1 offenbart ein Verfahren zum Stumpfschweißen von wenigstens zwei Blechen, nämlich einem ersten Blech und einem zweiten Blech, wobei aus diesen Blechen insbesondere eine Tailored Blank hergestellt wird.

Ausgehend von diesem Stand der Technik liegt der vorliegenden Erfindung die Aufgabe zugrunde, ein Verfahren zur Herstellung eines Tailored Welded Blank aufzuzeigen, welches herstellungstechnisch verbessert ist und insbesondere die Herstellungskosten reduziert.

Diese Aufgabe wird durch ein Verfahren zur Herstellung eines Tailored Welded Blank gemäß den Merkmalen des Patentanspruchs 1 gelöst.

Vorteilhafte Ausführungsvarianten der Erfindung sind Gegenstand der abhängigen Ansprüche.

Das erfindungsgemäße Verfahren zur Herstellung eines Tailored Welded Blank umfasst die folgenden Verfahrensschritte:
a) Bereitstellen eines Ausgangsmaterials aus Stahl mit einer beidseitigen metallischen Beschichtung, wobei die Beschichtung Aluminium enthält. Bei dem Ausgangsmaterial handelt es sich insbesondere um ein Blechband aus Stahl, welches bevorzugt zu einer Coil aufgewickelt bereitgestellt wird. Bei der metallischen Beschichtung handelt es sich vorzugsweise um eine Aluminium-Silicium-Beschichtung (AISi-Beschichtung).
b) Ausschneiden wenigstens einer ersten Blechplatine aus dem Ausgangsmaterial mit wenigstens einer ersten zu verschweißenden Schnittkante. Ist das Ausgangsmaterial ein Blechband, kann die erste Blechplatine aus dem abgerollten Blechband ausgeschnitten werden. Es ist auch möglich, dass das Blechband vor dem Ausschneidvorgang bereits vorbearbeitet wurde, beispielsweise zu einem Tailored Rolled Bank, oder zu einzelnen Blechabschnitten. Die zu verschweißende Schnittkante wird direkt durch den Ausschneidvorgang des Ausgangsmaterials ausgebildet und bedarf keiner weitergehenden Bearbeitung.
c) Bereitstellen einer zweiten, eine zweite zu verschweißende Schnittkante aufweisende Blechplatine, insbesondere mit einer beidseitigen metallischen Beschichtung, wobei die metallische Beschichtung Aluminium enthält. Die zweite Blechplatine kann ebenfalls aus dem Ausgangsmaterial aus Stahl ausgeschnitten sein.
d) Positionieren der Blechplatinen zur Durchführung eines Fügeprozesses, wobei die erste Schnittkante der ersten Blechplatine und die zweite Schnittkante der zweiten Blechplatine gegenüberliegend positioniert werden.
e) Verschweißen der ersten und zweiten Blechplatinen entlang der Schnittkanten mittels eines Schweißlasers unter Zugabe eines Schweißdrahts, insbesondere aus einer härtbaren Legierung, zu einem Tailored Welded Blank. Im Sinne der Erfindung wird unter einem Tailored Welded Blank ein Gegenstand verstanden, welcher durch Laserschweißen aus zwei Blechplatinen gebildet wurde, wobei die Blechplatinen sich bezüglich ihrer Materialdicken und/der ihres Materials und/oder bezüglich ihrer Form unterscheiden können.

Das Verfahren zeichnet sich erfindungsgemäß durch die nachfolgenden Merkmale aus:
- Wenigstens die erste Schnittkante ist als Fase ausgebildet, welche sich über die gesamte Blechdicke der ersten Blechplatine erstreckt. Unter einer Fase wird im Rahmen der Erfindung eine im Verhältnis zur Ober- bzw. Unterseite der Blechplatine abgeschrägte Fläche verstanden, welche sich über die gesamte Blechdicke, mithin von einer Oberseite bis zu einer Unterseite der Blechplatine erstreckt. Die Bezeichnung über die gesamte Blechdicke beinhaltet im Rahmen der Erfindung auch die metallischen Beschichtungen der Blechplatine. Die Fase wird erfindungsgemäß direkt durch den Ausschneidvorgang der ersten Blechplatine aus dem Ausgangsmaterial erzeugt. Dies hat den Vorteil, dass zur Herstellung der Fase kein zusätzlicher Bearbeitungsschritt, beispielsweise ein an den Ausschnitt anschließendes Fräs- oder Hobelverfahren, mehr nötig ist. Das Herstellungsverfahren des Tailored Welded Blank kann somit verbessert werden, da ein üblicherweise erforderlicher Verfahrensschritt entfällt, sodass Kosten eingespart werden können.
- Die Fase weist einen Fasenwinkel von 20° bis 80° auf. Der Fasenwinkel bezieht sich dabei auf den spitzen Winkel zwischen der Fläche der Fase und der Oberflächenebene der ersten Blechplatine. Dieser Winkelbereich hat sich im Rahmen der Erfindung als besonders vorteilhaft herausgestellt um einen Durchbrand, also ein Durchschmelzen der Blechplatinen zu vermeiden und gleichzeitig einen möglichst hohen Einbrand zu gewährleisten.
- Die Schnittkanten werden im Verfahrensschritt d) so zueinander positioniert, dass diese einen Stoß ausbilden und sich im Stoß kontaktieren, dergestalt, dass ein V-förmiger Spalt zwischen den Schnittkanten ausgebildet wird. Durch den V-förmigen Spalt wird eine große Einbrandfläche für die Schweißschmelze geschaffen. Zudem ermöglicht der V-förmige Spalt, dass die Schweißnaht nicht oder nur geringfügig über die Oberseiten der Blechplatinen übersteht, so dass eine Nachbearbeitung der Schweißnaht nicht erforderlich ist. Der ausgebildete Stoß sorgt zudem dafür, dass die Schweißschmelze innerhalb des V-förmigen Spalts verbleibt und ein Durchbrand der Schweißschmelze durch die Blechplatinen vermieden wird. Der V-förmige Spalt ermöglicht zudem eine einfache Einbringung des Schweißdrahts.

Vorzugsweise ist das Ausgangsmaterial aus härtbarem Mangan-Bor-Stahl (MnB-Stahl) ausgebildet.

In einer besonders bevorzugten Ausführungsvariante der Erfindung wird das Tailored Welded Blank zu einem Warmformbauteil weiterverarbeitet. Dafür schließen sich nach Verfahrensschritt e) die nachfolgenden Verfahrensschritte an:
f) Erwärmen des Tailored Welded Blank auf oberhalb der Austenitisierungstemperatur des MnB-Stahls und insbesondere Halten der Austenitisierungstemperatur des MnB-Stahls.
g) Warmformen und wenigstens bereichsweise presshärten des Tailored Welded Blank zu einem Warmformbauteil. Für den Warmformvorgang wird das Tailored Welded Blank in ein Pressenwerkzeug eingelegt und zum Warmformbauteil warmumgeformt. Beim Presshärten wird das umgeformte und weiterhin im Pressenwerkzeug befindliche Tailored Welded Blank zumindest bereichsweise durch Kühlung gehärtet.

Bevorzugt wird die ausgebildete Schweißnaht beim Warmformen pressgehärtet. So kann die Stabilität und die Belastbarkeit der Schweißnaht erhöht werden.

Die metallische Beschichtung dient beim Erwärmen zum Warmformen als Zunderschutz und für das Warmformbauteil als Korrosionsschutz, insbesondere in Verbindung mit einer späteren kathodischen Tauchlackierung des Warmformbauteils.

Die zweite Blechplatine kann aus einem nicht härtbaren Stahl ausgebildet sein. In diesem Fall ist die zweite Blechplatine bevorzugt dünner ausgebildet als die erste Blechplatine. Der aus der ersten Blechplatine aus härtbarem MnB-Stahl ausgebildete Bereich der Tailored Welded Blank ist nach dem Warmformen beigesteif und kann hohen Belastungen standhalten, während der aus der zweiten Blechplatine aus nicht härtbarem Stahl ausgebildete Bereich der Tailored Welded Blank bereits bei deutlich geringeren Belastungen verformbar ist. Eine entsprechend ausgebildete Tailored Welded Blank ist beispielsweise für die Herstellung von Fahrzeugkarosserien von Bedeutung, da die Karosserie in bestimmten Bereichen biegesteif und belastbar aber insbesondere in den Knautschzonen leicht verformbar sein muss.

Vorzugsweise liegt der Fasenwinkel in einem Bereich von 30° bis 78°, insbesondere von 45° bis 75°. Diese Winkel sind besonders vorteilhaft, um einen Durchbrand der Schweißschmelze zu verhindern und gleichzeitig einen möglichst guten Einbrand der Schweißschmelze in die zu fügenden Blechplatinen zu gewährleisten.

Weiterhin hat es sich im Rahmen der Erfindung als vorteilhaft erwiesen, wenn der Spalt zwischen den Schnittkanten an seiner breitesten Stelle kleiner als 1 mm ist. Hierdurch kann eine sichere und belastbare Verbindung der Blechplatinen sichergestellt werden.

In einer besonders vorteilhaften Ausführungsvariante der Erfindung wird wenigstens die erste Schnittkante der ersten Blechplatine mittels Scherschneiden hergestellt. Dafür wird das Ausgangsmaterial aus Stahl bevorzugt in ein Spannelement eingespannt, dergestalt, sodass das Ausgangsmaterial beidseitig nahe des Schnittrandes abgestützt wird. Der eigentliche Schneidvorgang erfolgt insbesondere mittels eines Schneidstempels, mit dem eine zur Oberfläche der Blechplatine abgeschrägte Schnittkante und somit direkt eine Fase hergestellt werden kann.

Besonders vorteilhaft ist es, wenn der Schneidvorgang kontinuierlich erfolgt, indem der Schneidstempel beim Schneidvorgang entlang der Schnittlinie bewegt wird. Dies ermöglicht eine vorteilhafte Pressenlastverteilung.

Nach dem Schneidvorgang ist keine Schnittkantennachbehandlung oder eine Schweißvorbehandlung der Schnittkanten erforderlich.

Durch das Scherschneiden können geringe Mengen der AlSi-Beschichtung in die Schnittkante bzw. die Fase eingeschleppt bzw. eingeschmiert werden. Im Rahmen der Erfindung hat sich jedoch herausgestellt, dass kein Abladieren der eingeschleppten Beschichtung erforderlich ist, da die Einbringung einer geringen Menge der AISi-Beschichtung in die Schweißnaht keine relevante Verschlechterung derselben mit sich bringt. Vielmehr hat sich ein Einschleppen bzw. Einschmieren der AlSi-Beschichtung als vorteilhaft im Hinblick auf den Verschleiß des Schneidwerkzeugs herausgestellt.

Alternativ kann wenigstens die erste Schnittkante der ersten Blechplatine mittels eines Laserschnitts erzeugt werden, in welchem gleichzeitig die Fase ausgebildet wird. Auch die Erzeugung der ersten Schnittkante der ersten Blechplatine mittels Fräsen ist möglich, wobei auch in diesem Fall die Fase direkt durch den Fräsvorgang ausgebildet wird.

Die durch das Laserschweißen erzeugte Schweißnaht kann Bestandteile des Stahls, insbesondere des MnB-Stahls, des Schweißdrahts und optional auch der metallischen Beschichtung enthalten.

Im Rahmen der Erfindung hat es sich weiterhin als vorteilhaft herausgestellt, dass wenigstens die erste Schnittkante der ersten Blechplatine mit einem Bruchanteil von 40 % bis 70 % und einem Glattschnittanteil von 30 % bis 60 % hergestellt wird.

Insbesondere ist bei dem Laserschweißen die Seite der ersten Blechplatine in Richtung des Lasers gerichtet, welche bei dem Ausschneiden der ersten Blechplatine die dem Schneidwerkzeug abgewandte Seite war. In diesem Fall liegt der Glattschnittbereich im unteren Bereich der ersten Schnittkante, sodass der Bruchbereich der ersten Schnittkante im Bereich der Schweißschmelze liegt und beim Schweißen aufgeschmolzen wird.

Die Schweißnaht des Tailored Welded Blank weist insbesondere folgende Bestandteile auf, wobei die restlichen Bestandteile insbesondere Eisen und herstellungsbedingte Verunreinigungen sind:

| | |
|---|---|
| C | 0,12-0,22 Gew.% |
| Si | 0,3-0,8 Gew.% |
| Mn | 1,5-2 Gew.% |
| Cr | 0,3-0,45 Gew.% |
| Ni | 1,5-2,3 Gew.% |
| Mo | 0,3-0,5 Gew.% |
| B | <0,003 Gew.% |
| Al | <0,3 Gew.%, bevorzugt <0,2 Gew.%. |

Eine entsprechende Zusammensetzung der Schweißnaht hat sich im Rahmen der Erfindung als vorteilhaft für deren Festigkeit und Belastbarkeit herausgestellt.

Vor dem Schweißvorgang kann eine Schweißbadsicherung unterhalb des Stoßes der Schnittkanten angeordnet werden. Während des Laserschweißens kann es passieren, dass die AlSi-Beschichtung auf der Unterseite der Blechplatinen aufgeschmolzen wird. Zudem kann es punktuell zu einen Durchbrand der Schweißschmelze kommen. Bei der Schweißbadsicherung handelt es sich insbesondere um eine aus einem nicht haftenden, hochschmelzenden Werkstoff bzw. Verbundstoff, insbesondere aus Keramik ausgebildete Leiste, welche im Falle eines Durchbrands oder eines Aufschmelzens der AlSi-Beschichtung der Ausformung der unteren Schweißnaht dient. Dafür weist die Schweißbadsicherung vorzugsweise eine Ausnehmung zur Aufnahme der austretenden Schweißschmelze oder aufgeschmolzenen AISi-Beschichtung auf. Diese Ausnehmung hat besonders bevorzugt eine maximale Tiefe von 0,2 mm. Wird eine Schweißbadsicherung verwendet kann eine Nachbearbeitung der Schweißnaht auch auf der Unterseite des Tailored Welded Blank vermieden werden.

Vorzugsweise wird ein Schweißdraht mit folgenden Legierungsbestandteilen verwendet, wobei die restlichen Bestandteile insbesondere Eisen und herstellungsbedingte Verunreinigungen sind:

| | |
|---|---|
| C | 0,02-0,22 Gew.% |
| Si | 0,6-1,0 Gew.% |
| Mn | 1,5-2,3 Gew.% |
| Cr | 0,35-0,55 Gew.% |
| Ni | 1,85-2,85 Gew.% |
| Mo | 0,35-0,75 Gew.%. |

Insbesondere wird ein Schweißdraht mit einem Durchmesser von 0,5 mm bis 1,5 mm verwendet. Die Menge des Schweißdrahtzusatzes kann über den Drahtvorschub eingestellt werden.

Die metallische Beschichtung weist vorzugsweise eine Schichtdicke von 10 bis 50 µm auf.

Bevorzugt weisen die Blechplatinen eine Blechdicke von 0,8 bis 2,4 mm auf.

Erfindungsgemäß hergestellte Tailored Welded Blanks werden vorzugsweise für die Herstellung von Warmformbauteilen für Fahrzeugkarosserien verwendet, insbesondere für Türringe bzw. Seitenwände, Säulen sowie Stoßfängerquerträger, Längsträger und Unterbodenbauteile.

Weitere Vorteile, Merkmale, Eigenschaften und Aspekte der vorliegenden Erfindung sind Bestandteil der folgenden Beschreibung. Bevorzugte Ausführungsvarianten werden in den schematischen Figuren dargestellt. Diese dienen dem einfachen Verständnis der Erfindung. Es zeigen:
- Figuren 1A bis F: zur Durchführung eines erfindungsgemäßen Fügeprozesses positionierte Blechplatinen und
- Figuren 2A und B: zur Durchführung eines erfindungsgemäßen Fügeprozesses positionierte Blechplatinen mit einer Schweißbadsicherung.

In den Figuren werden für gleiche oder ähnliche Bauteile dieselben Bezugszeichen verwendet, auch wenn eine wiederholte Beschreibung aus Vereinfachungsgründen entfällt.

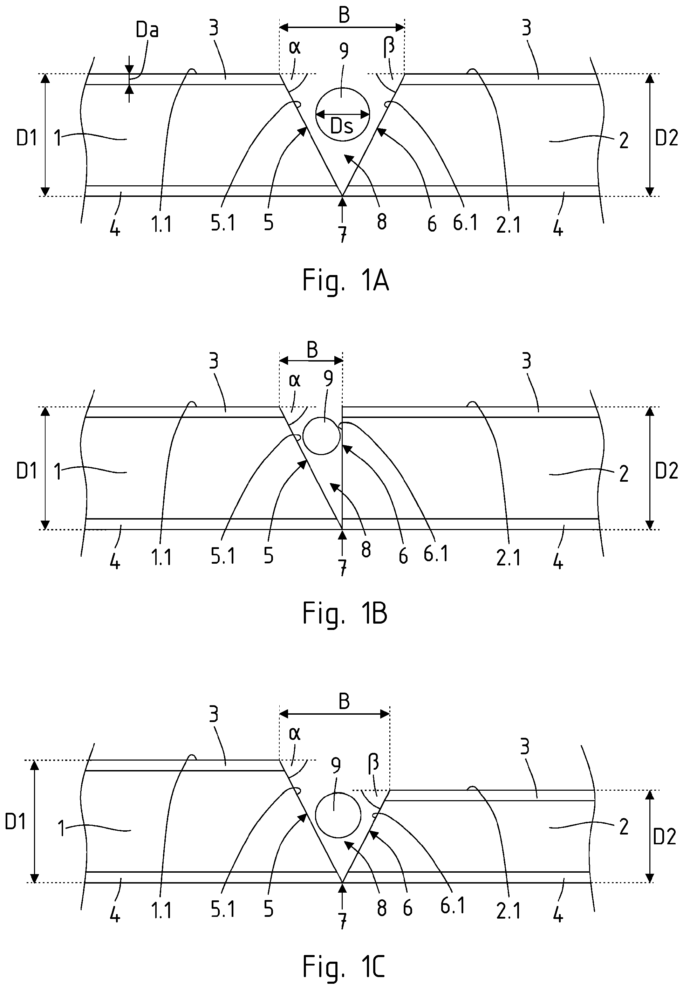

Die Figuren 1A bis F zeigen zur Durchführung eines Fügeprozesses positionierte Blechplatinen 1, 2 gemäß Verfahrensschritt d).

Die in Figur 1A gezeigte erste Blechplatine 1 und zweite Blechplatine 2 sind jeweils aus einem Ausgangsmaterial, nämlich einem Band aus härtbarem Mangan-Bor-Stahl ausgeschnitten. Die hier nicht näher dargestellten Bänder und folglich die Blechplatinen 1, 2 weisen jeweils eine beidseitige metallische Beschichtung 3, 4 auf, bei der es sich um eine Aluminium-Silicium-Beschichtung handelt. Die Aluminium-Silicium-Beschichtung weisen jeweils eine Schichtdicke Da von 10 bis 50 µm auf.

Die erste Blechplatine 1 weist eine erste zu verschweißende Schnittkante 5 auf. Die zweite Blechplatine 2 weist eine zweite zu verschweißende Schnittkante 6 auf. Beide Schnittkanten 5, 6 sind als Fasen ausgebildet, welche sich jeweils über die gesamte Blechdicke D1, D2 der jeweiligen Blechplatine 1, 2 erstrecken. Die Blechdicken D1, D2 umfassen dabei auch jeweils die beidseitigen AlSi-Beschichtungen 3, 4. Die Blechplatinen 1, 2 weisen eine identische Blechdicke D1, D2 auf.

Die als Fasen ausgebildeten Schnittkanten 5, 6 weisen jeweils einen Fasenwinkel α, β von 60° auf. Die Fasenwinkel α, β beziehen sich jeweils auf den spitzen Winkel zwischen den Flächen 5.1 und 6.1 der jeweiligen Schnittkanten 5, 6 und der Ebene der jeweiligen Oberseite 1.1 und 2.1 der Blechplatinen 1, 2.

Die Blechplatinen 1, 2 sind zur Durchführung eines Fügeprozesses positioniert, wobei die erste Schnittkante 5 der ersten Blechplatine 1 und die zweite Schnittkante 6 der zweiten Blechplatine 2 gegenüberliegend positioniert sind. Die Schnittkanten 5, 6 sind so zueinander positioniert, dass diese sich in einem Stoß 7 kontaktieren, dergestalt, dass ein V-förmiger Spalt 8 zwischen den Schnittkanten 5, 6 ausgebildet wird. Die Ausbildung des V-förmigen Spalts 8 hat den Vorteil, dass eine große Fläche für den Einbrand der Schweißschmelze geschaffen wird und zudem ein Überstand der Schweißschmelze und somit der späteren Schweißnaht über die Oberseiten 1.1, 2.1 der Blechplatinen 1, 2 fast vollständig vermieden werden kann. Folglich ist keine Nachbearbeitung der ausgebildeten Schweißnaht erforderlich.

Die Ausbildung der Schnittkanten 5, 6 als Fasen, welche sich jeweils über die gesamte Blechdicke D1, D2 der Blechplatinen 1, 2 erstrecken, hat zudem den Vorteil, dass die Fasen direkt beim Ausschnitt der Blechplatinen 1, 2 aus dem Band aus härtbarem MnB-Stahl ausgebildet werden können. Der Ausschnitt der Blechplatinen 1, 2 aus dem Band bzw. aus den Bändern wird durch einen kontinuierlichen Scherschnitt ermöglicht, der direkt schräg durchgeführt wird, so dass die jeweiligen Fasenwinkel α, β bereits beim Ausschneiden der Blechplatinen 1, 2 ausgebildet werden. Es ist somit keine spanende Nachbearbeitung der Schnittkanten 5, 6 nach dem Ausschneidvorgang erforderlich. Dies ermöglicht eine verfahrenstechnisch verbesserte Herstellung des Tailored Welded Blanks und spart zudem Kosten. Ein Oberflächen- oder Kantennachbearbeiten zwischen Schneiden und Schweißen ist erfindungsgemäß nicht erforderlich.

Nach dem in Figur 1A gezeigten Positionieren der Blechplatinen 1, 2 werden diese entlang der Schnittkanten 5, 6 mittels eines Schweißlasers unter Zugabe eines Schweißdrahts 9 zu einem Tailored Welded Blank verschweißt. Der Schweißdraht 9 ist bei Verwendung zweier Mangan-Bohr-Stahl-Bändern bzw. Blechplatinen 1, 2 aus einer härtbaren Legierung ausgebildet und wird beim Schweißvorgang in den V-förmigen Spalt 8 aufgegeben. Die Menge des zugegebenen Schweißdrahts 9 wird über einen Drahtvorschub reguliert.

Anschließend kann das Tailored Welded Blank Warmgeformt und pressgehärtet werden. Dafür wird das Tailored Welded Blank auf eine Temperatur oberhalb der Austenitisierungstemperatur des MnB-Stahls erwärmt und auf dieser Temperatur gehalten. Danach erfolgt das Warmformen und wenigstens bereichsweise Presshärten des Tailored Welded Blank zu einem Warmformbauteil.

Der Spalt 8 zwischen den Schnittkanten 5, 6 ist an seiner breitesten Stelle B kleiner als 1 mm. Dies stellt eine sichere Verbindung zwischen den Blechplatinen 1, 2 sicher.

Die Schnittkanten 5, 6 werden vorzugsweise mit einem Bruchanteil von 40 % bis 70 % und einem Glattschnittanteil von 30 % bis 60 % hergestellt.

Der verwendete Schweißdraht 9 weist einen Durchmesser Ds von ca. 0,5 mm auf.

Die Figur 1B zeigt eine weitere Ausgestaltung der Blechplatinen 1, 2. Während die erste Blechplatine 1 analog zur ersten Blechplatine 1 der Figur 1A ausgebildet ist, ist die Schnittkante 6 der zweiten Blechplatine 2 nicht als Fase ausgebildet. Die Schnittkante 6 weist keine Abschrägung auf und steht im rechten Winkel zur Oberseite 2.1 der zweiten Blechplatine 2. Figur 1B verdeutlicht, dass nur die erste Blechplatine 1 mit einer erfindungsgemäßen Fase hergestellt sein muss, um die Vorteile der Erfindung umsetzen zu können. In diesem Fall kann die zweite Blechplatine 2 auch aus einem unbeschichteten oder anders metallisch beschichteten Stahlband ausgebildet sein. Ist nur die erste Schnittkante 5 als Fase ausgebildet, liegt der Fasenwinkel α bevorzugt in einem Bereich von 20 bis 50°, um eine ausreichende Spaltgröße zu Aufnahme der Schweißschmelze zu gewährleisten.

Die Figur 1C zeigt eine weitere Ausgestaltungsvariante der Blechplatinen 1, 2. In diesem Fall weisen beide Blechplatinen 1, 2 eine als Fase ausgebildete Schnittkante 5, 6 mit einem vorzugweise identischen Fasenwinkel α, β auf. Hier sind jedoch die Dicken D1, D2 der Blechplatinen 1, 2 unterschiedlich. Die erste Blechplatine 1 weist eine größere Dicke D1 als die zweite Blechplatine 2 auf. Die Figur 1C verdeutlicht, dass durch das erfindungsgemäße Herstellungsverfahren ein Warmformbauteil hergestellt werden kann, welches aus unterschiedlich dimensionierten Blechplatinen 1, 2 erzeugt ist, aber insbesondere aus einer identischen Mangan-Bor-Stahllegierung. Ohne erforderliche Nacharbeit kann so ein Tailored Welded Blank ohne Scheißnahtüberstand über die Blechdicke D1 der Blechplatine 1 hinaus hergestellt werden.

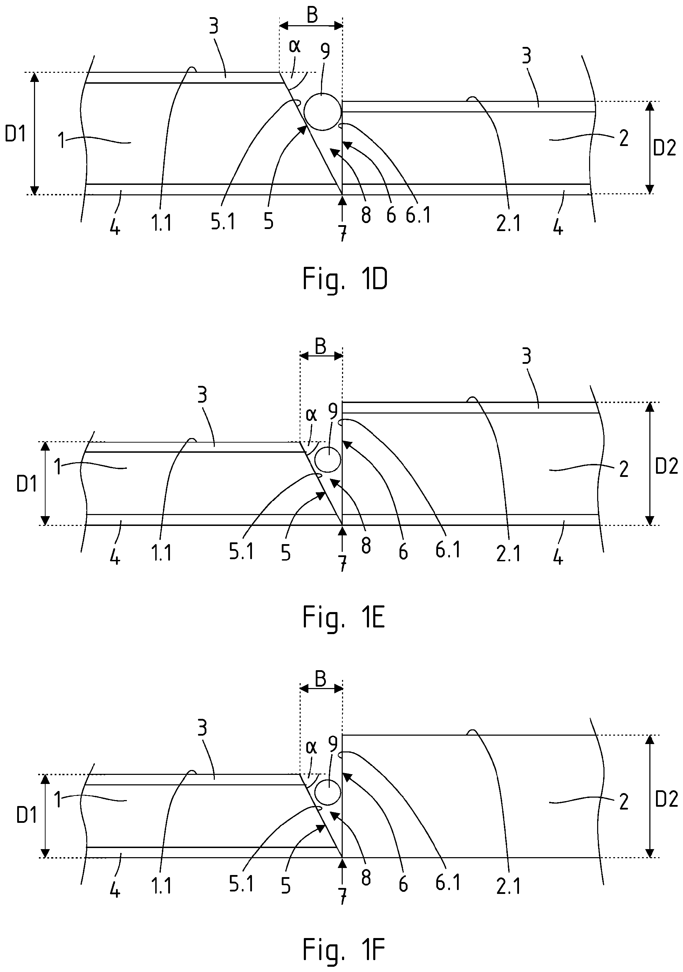

Die in der Figur 1D gezeigten Blechplatinen 1, 2 weisen ebenfalls unterschiedliche Dicken D1, D2 auf, wobei in dieser Ausführungsvariante analog zu Figur 1B die Schnittkante 6 der zweiten Blechplatine 2 nicht als Fase ausgebildet ist. Vorzugsweise liegt der Fasenwinkel α der ersten Blechplatine 1 bei nur einseitiger vorhandener Fase in einem Bereich von 20° bis 50°, um eine ausreichende Spaltgröße zur Aufnahme der Schweißschmelze zu gewährleisten.

Die Figure 1E zeigt eine weitere mögliche Ausgestaltungsvariante der Blechplatinen 1, 2. In diesem Ausführungsbeispiel weist die erste Blechplatine 1 eine geringere Blechdicke D1 auf als die zweite Blechplatine 2. Diese Ausgestaltung hat den Vorteil, dass sich die obere metallische Beschichtung 3 der zweiten Blechplatine 2 beim Schweißvorgang außerhalb der erzeugten Schweißbadschmelze befindet und somit den Fügeprozess nicht beeinflusst.

Die Figur 1F zeigt die Ausgestaltungsvariante gemäß Figur 1E, wobei die zweite Blechplatine 2 keine metallischen Beschichtungen 3, 4 aufweist.

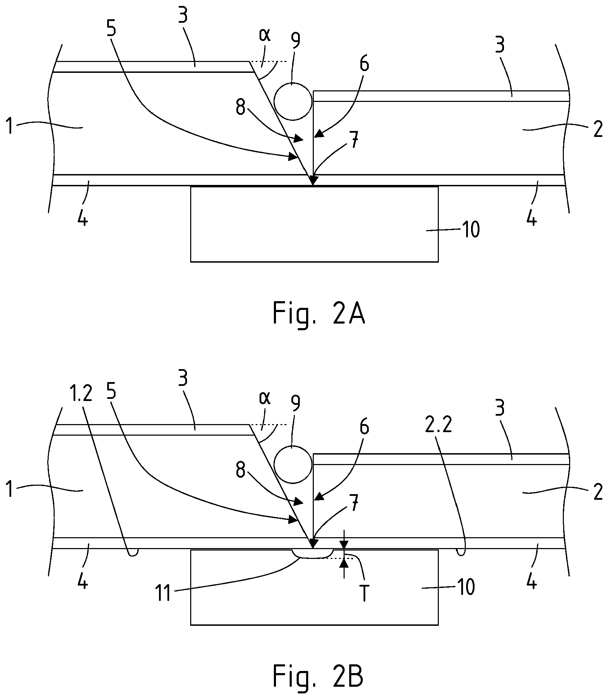

Die Figuren 2A und B zeigen die zum Fügeprozess positionierten Blechplatinen 1, 2 gemäß Figur 1D. Zusätzlich ist eine Schweißbadsicherung 10 unterhalb des Stoßes 7 der Schnittkanten 5, 6 angeordnet. Bei der Schweißbadsicherung 10 handelt es sich um eine aus einem nicht haftenden, hochschmelzenden Werkstoff bzw. Verbundstoff, insbesondere aus Keramik ausgebildete Leiste, welche im Falle eines Durchbrands der Schweißschmelze oder im Falle eines Aufschmelzens der unteren AlSi-Beschichtung 4 die Stabilität der zu bildenden Schweißnaht sicherstellt. Durch die Schweißbadsicherung 10 wird etwaige durchgebrannte Schweißbadschmelze oder aufgeschmolzene AlSi-Beschichtung zurückgehalten, so dass die Schweißnaht vollständig ausgebildet werden kann.

Die Figur 2B zeigt eine Anordnung gemäß Figur 2A, wobei die Schweißbadsicherung 10 eine Ausnehmung 11 zur Aufnahme austretender Schweißschmelze oder geschmolzener AlSi-Beschichtung aufweist. Die Ausnehmung 11 weist eine maximale Tiefe T von 0,2 mm auf. Mittels der Ausnehmung 11 kann die an den Unterseiten 1.2, 2.2 der Blechplatinen 1, 2 ausgebildete Schweißnaht geformt werden, sodass auch hier keine Nachbearbeitung der Schweißnaht erforderlich ist.

### Bezugszeichen:

- 1 -: erste Blechplatine
- 1.1 -: Oberseite zu 1
- 1.2 -: Unterseite zu 1
- 2 -: zweite Blechplatine
- 2.1 -: Oberseite zu 2
- 2.2 -: Unterseite zu 2
- 3 -: metallische Beschichtung
- 4 -: metallische Beschichtung
- 5 -: Schnittkante
- 5.1 -: Fläche zu 5
- 6 -: Schnittkante
- 6.1 -: Fläche zu 6
- 7 -: Stoß
- 8 -: Spalt
- 9 -: Schweißdraht
- 10 -: Schweißbadsicherung
- 11 -: Ausnehmung

- B -: breiteste Stelle
- D -: Blechdicke
- Da -: Schichtdicke
- Ds -: Durchmesser v. 9
- T -: maximale Tiefe von 11
- α -: Fasenwinkel
- β -: Fasenwinkel

## Patentansprüche

1. Verfahren zur Herstellung eines Tailored Welded Blank mit folgenden Verfahrensschritten:
a) Bereitstellen eines Ausgangsmaterials aus Stahl mit einer beidseitigen metallischen Beschichtung (3, 4), wobei die Beschichtung (3, 4) Aluminium enthält;
b) Ausschneiden einer ersten Blechplatine (1) aus dem Ausgangsmaterial mit wenigstens einer ersten zu verschweißenden Schnittkante (5);
c) Bereitstellen einer zweiten , eine zweite zu verschweißende Schnittkante (6) aufweisende Blechplatine (2), insbesondere mit einer beidseitigen metallischen Beschichtung, wobei die Beschichtung (3, 4) Aluminium enthält;
d) Positionieren der ersten Blechplatine (1) und der zweiten Blechplatinen (2) relativ zueinander zur Durchführung eines Fügeprozesses, wobei die erste Schnittkante (5) der ersten Blechplatine (1) und die zweite Schnittkante (6) der zweiten Blechplatine (2) gegenüberliegend positioniert werden;
e) Verschweißen der ersten Blechplatine (1) und der zweiten Blechplatinen (2) entlang der Schnittkanten (5, 6) mittels eines Schweißlasers unter Zugabe eines Schweißdrahts (9), insbesondere aus einer härtbaren Legierung, zu einem Tailored Welded Blank;
**dadurch gekennzeichnet, dass**
- wenigstens die erste Schnittkante (5) als Fase ausgebildet ist, welche sich über die gesamte Blechdicke (D1) der ersten Blechplatine (1) erstreckt, wobei die Fase direkt durch den Ausschneidvorgang der ersten Blechplatine (1) aus dem Ausgangsmaterial erzeugt wird;
- die Fase einen Fasenwinkel (α) von 20° bis 80° aufweist;
- die erste Schnittkante (5) und die zweite Schnittkante (6) in Verfahrensschritt d) so zueinander positioniert werden, dass diese sich in einem Stoß (7) kontaktieren, dergestalt, dass ein V-förmiger Spalt (8) zwischen der ersten Schnittkante (5) und der zweiten Schnittkante (6) ausgebildet wird.

2. Verfahren nach Anspruch 1, **dadurch gekennzeichnet, dass** das Ausgangsmaterial aus härtbarem MnB-Stahl ausgebildet ist.

3. Verfahren nach Anspruch 2, **dadurch gekennzeichnet, dass** das Tailored Welded Blank nach Verfahrensschritt e) auf eine Temperatur oberhalb der Austenitisierungstemperatur des MnB-Stahls erwärmt, anschließend warmgeformt und wenigstens bereichsweise zu einem Warmformbauteil pressgehärtet wird.

4. Verfahren nach Anspruch 3, **dadurch gekennzeichnet, dass** die Schweißnaht beim Warmformen pressgehärtet wird.

5. Verfahren nach einem der Ansprüche 1 bis 4, **dadurch gekennzeichnet, dass** der Fasenwinkel (α) in einem Bereich von 30° bis 78°, insbesondere von 45° bis 75° liegt.

6. Verfahren nach einem der Ansprüche 1 bis 5, **dadurch gekennzeichnet, dass** der Spalt (8) zwischen den Schnittkanten (5, 6) an seiner breitesten Stelle (B) kleiner als 1 mm, bevorzugt kleiner als 0,5 mm, besonders bevorzugt kleiner als 0,3 mm und insbesondere kleiner als 0,2 mm ist.

7. Verfahren nach einem der Ansprüche 1 bis 6, **dadurch gekennzeichnet, dass** wenigstens die erste Schnittkante (5) mittels Stanzen oder Scherschneiden hergestellt wird.

8. Verfahren nach Anspruch 7, **dadurch gekennzeichnet, dass** wenigstens die erste Schnittkante (5) mit einem Bruchanteil von 40 % bis 70 % und einen Glattschnittanteil von 30 % bis 60 % hergestellt wird.

9. Verfahren nach Anspruch 7 oder 8, **dadurch gekennzeichnet, dass** bei dem Laserschweißen die Seite der ersten Blechplatine (1) in Richtung des Lasers gerichtet ist, welche bei dem Ausschneiden der ersten Blechplatine (1) die dem Schneidwerkzeug abgewandte Seite war.

10. Verfahren nach einem der Ansprüche 1 bis 9, **dadurch gekennzeichnet, dass** die Schweißnaht des Tailored Welded Blank folgende Bestandteile aufweist, wobei die übrigen Bestandteile Eisen und herstellungsbedingte Verunreinigungen sind:
| | |
|---|---|
| C | 0,12-0,35 Gew.% |
| Si | 0,3-0,8 Gew. % |
| Mn | 1,5-2 Gew.% |
| Cr | 0,3-0,45 Gew.% |
| Ni | 1,5-2,3 Gew.% |
| Mo | 0,3-0,5 Gew. % |
| B | <0,003 Gew.% |
| Al | <0,3 Gew.%, bevorzugt <0,2 Gew.%. |

11. Verfahren nach einem der Ansprüche 1 bis 10, **dadurch gekennzeichnet, dass** beim Laserschweißen eine Schweißnaht erzeugt wird, welche Bestandteile des Stahls, des Schweißdrahts (9) und insbesondere der metallischen Beschichtung (3, 4) enthält.

12. Verfahren nach einem der Ansprüche 1 bis 11, **dadurch gekennzeichnet, dass** vor dem Schweißvorgang eine Schweißbadsicherung (10) unterhalb des Stoßes (7) der ersten Schnittkante (5) und der zweiten Schnittkante (6) angeordnet wird.

13. Verfahren nach Anspruch 12, **dadurch gekennzeichnet, dass** die Schweißbadsicherung (10) eine Ausnehmung (11) zur Aufnahme austretender Schweißschmelze oder aufgeschmolzener metallischer Beschichtung (3,4) aufweist.

14. Verfahren nach einem der Ansprüche 1 bis 13, **dadurch gekennzeichnet, dass** ein Schweißdraht (9) mit folgenden Legierungsbestandteilen verwendet wird, wobei die übrigen Bestandteile Eisen und herstellungsbedingte Verunreinigungen sind:
| | |
|---|---|
| C | 0,02-0,22 Gew.% |
| Si | 0,6-1,0 Gew.% |
| Mn | 1,5-2,3 Gew.% |
| Cr | 0,35-0,55 Gew.% |
| Ni | 1,85-2,85 Gew.% |
| Mo | 0,35-0,75 Gew.%. |

15. Verfahren nach einem der Ansprüche 1 bis 14, **dadurch gekennzeichnet, dass** wenigstens die erste Schnittkante (5) mittels eines Laserschnitts erzeugt wird.

## Claims

1. Method for producing a tailored welded blank, comprising the following process steps:
a) providing a steel starting material with a metallic coating (3, 4) on both sides, wherein the coating (3, 4) contains aluminium;
b) cutting out a first sheet metal blank (1) from the starting material with at least one first cutting edge (5) to be welded;
c) providing a second sheet metal blank (2) having a second cutting edge (6) to be welded, in particular with a double-sided metallic coating, wherein the coating (3, 4) contains aluminium;
d) positioning the first sheet metal blank (1) and the second sheet metal blanks (2) relative to each other for the purpose of carrying out a joining process, wherein the first cutting edge (5) of the first sheet metal blank (1) and the second cutting edge (6) of the second sheet metal blank (2) are positioned opposite each other;
e) welding the first sheet blank (1) and the second sheet blanks (2) along the cutting edges (5, 6) using a welding laser with the addition of a welding wire (9), in particular made of a hardenable alloy, to form a tailored welded blank;
**characterized in that**
- at least the first cutting edge (5) is formed as a chamfer which extends over the entire sheet thickness (D1) of the first sheet blank (1), wherein the chamfer is directly produced by cutting out the first sheet metal blank (1) from the starting material;
- the chamfer has a chamfer angle (α) of 20° to 80°;
- the first cutting edge (5) and the second cutting edge (6) are positioned relative to each other in process step d) such that they contact each other in a joint (7) such that a V-shaped gap (8) is formed between the first cutting edge (5) and the second cutting edge (6).

2. The method according to claim 1, **characterized in that** the starting material is made of hardenable MnB steel.

3. The method according to claim 2, **characterized in that** the tailored welded blank, after process step e), is heated to a temperature above the austenitizing temperature of the MnB steel, subsequently hot-formed and at least partially press-hardened to form a hot-formed component.

4. The method according to claim 3, **characterized in that** the weld seam is press-hardened during hot forming.

5. The method according to any one of claims 1 to 4, **characterized in that** the chamfer angle (α) is in a range of 30° to 78°, in particular from 45° to 75°.

6. The method according to any one of claims 1 to 5, **characterized in that** the gap (8) between the cutting edges (5, 6) at its widest position (B) is less than 1 mm, preferably less than 0.5 mm, more preferably less than 0.3 mm, and in particular less than 0.2 mm.

7. The method according to any one of claims 1 to 6, **characterized in that** at least the first cutting edge (5) is produced by punching or shearing.

8. The method according to claim 7, **characterized in that** at least the first cutting edge (5) is produced with a fraction of 40 % to 70 % and a smooth cut fraction of 30 % to 60 %.

9. The method according to claim 7 or 8, **characterized in that**, during laser welding, the side of the first sheet metal blank (1) is directed towards the laser which was the side facing away from the cutting tool when the first sheet metal blank (1) was cut out.

10. The method according to any one of claims 1 to 9, **characterized in that** the weld seam of the tailored welded blank comprises the following components, wherein the remaining components are iron and manufacturing-related impurities:
| | |
|---|---|
| C | 0.12-0.35 wt.% |
| Si | 0.3-0.8 wt.% |
| Mn | 1.5-2 wt.% |
| Cr | 0.3-0.45 wt.% |
| Ni | 1.5-2.3 wt.% |
| Mo | 0.3-0.5 wt.% |
| B | <0.003 wt.% |
| Al | <0.3 wt.%, preferably <0.2 wt.%. |

11. The method according to any one of claims 1 to 10, **characterized in that**, during laser welding, a weld seam is produced which contains components of the steel, the welding wire (9) and in particular the metallic coating (3, 4).

12. The method according to any one of claims 1 to 11, **characterized in that**, before the welding process, a weld pool protection device (10) is arranged below the joint (7) of the first cutting edge (5) and the second cutting edge (6).

13. The method according to claim 12, **characterized in that** the weld pool protection (10) has a recess (11) for receiving emerging weld molten metal or molten metallic coating (3, 4).

14. The method according to any one of claims 1 to 13, **characterized in that** a welding wire (9) is used with the following alloy components, wherein the remaining components are iron and manufacturing-related impurities:
| | |
|---|---|
| C | 0.02-0.22 wt.% |
| Si | 0.6-1.0 wt.% |
| Mn | 1.5-2.3 wt.% |
| Cr | 0.35-0.55 wt.% |
| Ni | 1.85-2.85 wt.% |
| Mo | 0.35-0.75 wt.%. |

15. The method according to any one of claims 1 to 14, **characterized in that** at least the first cutting edge (5) is produced by means of a laser cut.

## Revendications

1. Procédé de fabrication d'un flan soudé sur mesure avec les étapes de procédé suivantes :
a) la fourniture d'un matériau de départ en acier avec un revêtement (3, 4) métallique des deux côtés, dans lequel le revêtement (3, 4) contient de l'aluminium ;
b) la découpe d'un premier flan de tôle (1) à partir du matériau de départ avec au moins un premier bord de coupe (5) à souder ;
c) la fourniture d'un second flan de tôle (2) présentant un second bord de coupe (6) à souder, en particulier avec un revêtement métallique bilatéral, dans lequel le revêtement (3, 4) contient de l'aluminium ;
d) le positionnement du premier flan de tôle (1) et du second flan de tôle (2) l'un par rapport à l'autre pour réaliser un processus d'assemblage, dans lequel le premier bord de coupe (5) du premier flan de tôle (1) et le second bord de coupe (6) du second flan de tôle (2) sont positionnés en vis-à-vis ;
e) le soudage du premier flan de tôle métallique (1) et du second flan de tôle métallique (2) le long des bords de coupe (5, 6) au moyen d'un laser de soudage par ajout d'un fil de soudage (9), en particulier en alliage durcissable, en un flan soudé sur mesure ;
**caractérisé en ce que**
- au moins le premier bord de coupe (5) est réalisé en tant que chanfrein qui s'étend sur toute l'épaisseur de tôle (D1) du premier flan de tôle (1), dans lequel le chanfrein est produit directement par le processus de découpe du premier flan de tôle (1) à partir du matériau de départ ;
- le chanfrein présente un angle de chanfrein (α) de 20° à 80° ;
- le premier bord de coupe (5) et le second bord de coupe (6) sont positionnés l'un par rapport à l'autre dans l'étape de procédé d) de sorte qu'ils se touchent dans un joint (7), de sorte qu'une fente (8) en forme de V est réalisée entre le premier bord de coupe (5) et le second bord de coupe (6).

2. Procédé selon la revendication 1, **caractérisé en ce que** le matériau de départ est constitué d'acier MnB durcissable.

3. Procédé selon la revendication 2, **caractérisé par le fait que** le flan soudé sur mesure est chauffé selon l'étape de procédé e) à une température supérieure à la température d'austénitisation de l'acier MnB, puis thermoformé et embouti à chaud au moins par endroits en un composant thermoformé.

4. Procédé selon la revendication 3, **caractérisé en ce que** le cordon de soudure est embouti à chaud lors du thermoformage.

5. Procédé selon l'une quelconque des revendications 1 à 4, **caractérisé en ce que** l'angle de chanfrein (α) se situe dans une plage de 30° à 78°, en particulier de 45° à 75°.

6. Procédé selon l'une quelconque des revendications 1 à 5, **caractérisé en ce que** la fente (8) entre les bords de coupe (5, 6) est, à son point le plus large (B), inférieure à 1 mm, de préférence inférieure à 0,5 mm, de manière particulièrement préférée inférieure à 0,3 mm et en particulier inférieure à 0,2 mm.

7. Procédé selon l'une quelconque des revendications 1 à 6, **caractérisé en ce qu'**au moins le premier bord de coupe (5) est obtenu par estampage ou cisaillage.

8. Procédé selon la revendication 7, **caractérisé en ce qu'**au moins le premier bord de coupe (5) est obtenu avec un pourcentage de cassure de 40 % à 70 % et un pourcentage de coupe lisse de 30 % à 60 %.

9. Procédé selon la revendication 7 ou la revendication 8, **caractérisé en ce que**, lors du soudage laser, le côté du premier flan de tôle (1) qui était le côté opposé à l'outil de coupe lors de la découpe du premier flan de tôle (1) est orienté en direction du laser.

10. Procédé selon l'une quelconque des revendications 1 à 9, **caractérisé en ce que** le cordon de soudure du flan soudé sur mesure présente les composants suivants, dans lequel les autres composants sont du fer et des impuretés liées à la fabrication :
| | |
|---|---|
| C | 0,12-0,35 % en poids |
| Si | 0,3-0,8 % en poids |
| Mn | 1,5-2 % en poids |
| Cr | 0,3-0,45 % en poids |
| Ni | 1,5-2,3 % en poids |
| Mo | 0,3-0,5 % en poids |
| B | < 0,003 % en poids |
| Al | < 0,3 % en poids, de préférence < 0,2 % en poids. |

11. Procédé selon l'une quelconque des revendications 1 à 10, **caractérisé en ce qu'**un cordon de soudure est produit lors du soudage laser, lequel contient des composants de l'acier, du fil à souder (9) et en particulier du revêtement (3, 4) métallique.

12. Procédé selon l'une quelconque des revendications 1 à 11, **caractérisé en ce qu'**avant le processus de soudage, un support (10) de bain de fusion est disposé sous le joint (7) du premier bord de coupe (5) et du second bord de coupe (6).

13. Procédé selon la revendication 12, **caractérisé en ce que** le support (10) de bain de fusion présente un évidement (11) pour recevoir la masse fondue de soudure sortant ou le revêtement (3, 4) métallique fondu.

14. Procédé selon l'une quelconque des revendications 1 à 13, **caractérisé en ce qu'**un fil à souder (9) est utilisé avec les composants d'alliage suivants, dans lequel les autres composants sont du fer et des impuretés liées à la fabrication :
| | |
|---|---|
| C | 0,02-0,22 % en poids |
| Si | 0,6-1,0 % en poids |
| Mn | 1,5-2,3 % en poids |
| Cr | 0,35-0,55 % en poids |
| Ni | 1,85-2,85 % en poids |
| Mo | 0,35-0,75 % en poids. |

15. Procédé selon l'une quelconque des revendications 1 à 14, **caractérisé en ce qu'**au moins le premier bord de coupe (5) est produit au moyen d'une découpe laser.
